Europäisches Patentamt

European Patent Office

Office européen des brevets

(19)

(11) Veröffentlichungsnummer: **0 243 578**
**B1**

(12) # EUROPÄISCHE PATENTSCHRIFT

(45) Veröffentlichungstag der Patentschrift:
**12.12.90**

(21) Anmeldenummer: **87100776.1**

(22) Anmeldetag: **21.01.87**

(51) Int. Cl.⁵: **C21D 1/09**, C21D 9/40,
F16C 33/60, B23D 31/00

(54) **Verfahren zum Herstellen eines an wenigstens einer Stelle seines Umfanges eine durchgehende Sprengfuge aufweisenden Wälzlagerlaufringes.**

(30) Priorität: **26.04.86  DE 3614246**

(43) Veröffentlichungstag der Anmeldung:
**04.11.87 Patentblatt 87/45**

(45) Bekanntmachung des Hinweises auf die Patenterteilung:
**12.12.90 Patentblatt 90/50**

(84) Benannte Vertragsstaaten:
**DE ES FR GB IT SE**

(56) Entgegenhaltungen:
**DE-A- 2 941 480**
**DE-A- 3 120 655**
**DE-A- 3 425 829**
**GB-A- 2 064 387**
**US-A- 3 884 406**

(73) Patentinhaber: **INA Wälzlager Schaeffler KG,
Industriestrasse 1-3 Postfach 1220,
D-8522 Herzogenaurach(DE)**

(72) Erfinder: **Simon, Michael, Hans-Herold-Strasse 27,
D-8522 Herzogenaurach(DE)**
Erfinder: **Kreiss, Werner, Fliersbachstrasse 25,
D-8520 Erlangen(DE)**

(74) Vertreter: **Klug, Horst, Dipl.-Ing. (FH), c/o INA Wälzlager
Schaeffler KG Postfach 12 20,
D-8522 Herzogenaurach(DE)**

## Beschreibung

Die Erfindung betrifft ein Verfahren zur Herstellung eines an wenigstens einer Stelle seines Umfanges eine durchgehende Sprengfuge aufweisenden Wälzlagerlaufringes, der eine Sitzfläche und eine Lauffläche für Wälzkörper aufweist, wobei dessen Oberfläche vor dem Sprengen entlang wenigstens eines Teils des beabsichtigten Verlaufs der Sprengfuge und in örtlicher Begrenzung quer zu diesem mit einer energiereichen Strahlung beaufschlagt und beim Sprengen der mit der Strahlung beaufschlagte Bereich der Oberfläche durch eine äußere Kraft auf Zug beansprucht wird.

Solche Verfahren werden auf gehärtete Wälzlagerlaufringe angewendet und beruhen darauf, daß durch die Einwirkung der energiereichen Strahlung lokal eine extreme Versprödung im Gefüge des Wälzlagerlaufringes auftritt, welche quasi als "innere Kerbe" wirkt, entlang derer der Wälzlagerlaufring unter Einwirkung einer äußeren Kraft gesprengt werden kann, die dann besonders gering ist, wenn sie derart auf den Wälzlagerlaufring wirkt, daß dieser in dem von der Strahlung beaufschlagten Bereich seiner Oberfläche auf Zug beansprucht wird. Ein solches Verfahren ist bekannt (DE-OS 34 25 829, Figure 1) und hat sich in der Praxis bewährt. Als nachteilig wurde jedoch festgestellt, daß gelegentlich beim Sprengen an der Sprengfuge Werkstoff aus der Lauffläche abplatzt, wodurch der entsprechende Laufring unbrauchbar ist.

Der Erfindung liegt die Aufgabe zugrunde, ein gattungsgemäßes Verfahren anzugeben, bei dem das Abplatzen von Werkstoff aus der Lauffläche im Bereich der Sprengfuge beim Sprengen vermieden ist.

Nach der Erfindung wird dies dadurch erreicht, daß die Sitzfläche des Laufringes mit der Strahlung beaufschlagt wird und die äußere Kraft als Druckkraft in die Lauffläche in deren dem mit der Strahlung beaufschlagten Bereich der Sitzfläche unmittelbar gegenüberliegenden Bereich eingeleitet wird. Es hat sich gezeigt, daß bei dieser Verfahrensweise die beschriebenen Abplatzungen mit hoher Sicherheit vermieden werden können, wobei die besten Ergebnisse dann erzielt werden, wenn die Wirkungslinie der Druckkraft exakt durch den beabsichtigten Verlauf der Sprengfuge geht.

Die energiereiche Strahlung mit der die Sitzfläche beaufschlagt wird, ist nach einer Ausgestaltung der Erfindung ein Laser- oder Elektronenstrahl.

Ein Verfahren zur Herstellung eines an zwei diametral gegenüberliegenden Stellen seines Umfanges gesprengten äußeren Wälzlagerlaufringes sieht nach einer Variante der Erfindung vor, daß die Sitzfläche mit der Strahlung jeweils derart beaufschlagt wird, daß die Einwirktiefe der Strahlung wenigstens 30 Prozent der Wandstärke des Laufringes beträgt. Es ergibt sich beim Sprengen dann in vorteilhafter Weise die bei geteilten äußeren Wälzlagerlaufringen erwünschte Zitronenform, das heißt, die beiden Hälften des Wälzlagerlaufringes weisen jeweils einen zu den Sprengfugen hin geringfügig zunehmenden Krümmungsradius auf. Im eingebauten Zustand des Wälzlagerlaufringes wird dadurch die Entstehung von Absätzen in der Lauffläche im Bereich der Sprengfuge und der damit verbundene gestörte Lauf der Wälzkörper vermieden.

In den beigefügten Zeichnungen sind Ausführungsbeispiele der Erfindung dargestellt. Es zeigen:

Fig. 1 in perspektivischer Darstellung das Sprengen eines äußeren Laufringes nach einem erfindungsgemäßen Verfahren und

Fig. 2 ebenfalls in perspektivischer Darstellung das Sprengen eines inneren Laufringes nach einem erfindungsgemäßen Verfahren.

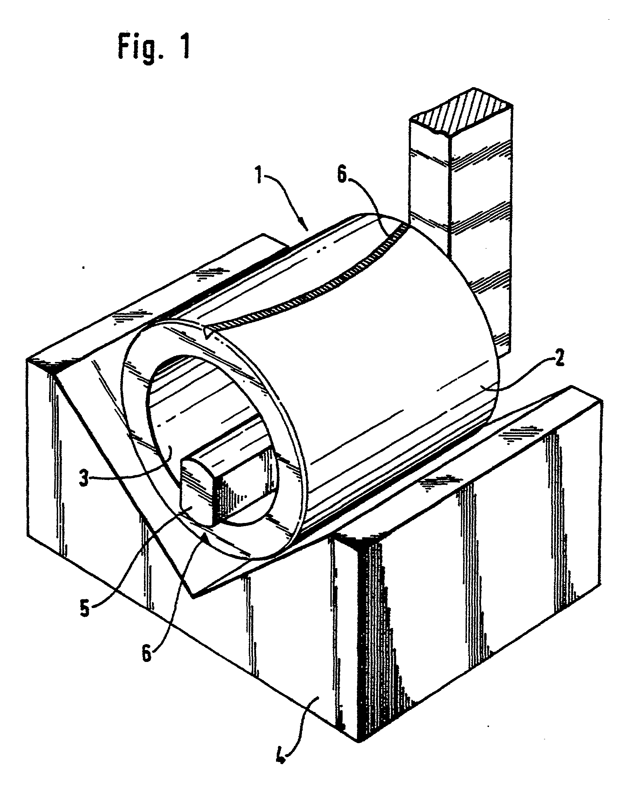

Fig. 1 zeigt einen äußeren Wälzlagerlaufring 1 mit einer Sitzfläche 2 und einer Lauffläche 3, der durch Sprengen an zwei einander diametral gegenüberliegenden Stellen seines Umfangs in zwei Halbschalen geteilt werden soll. Zu diesem Zweck wurde auf den äußeren Wälzlagerlaufring 1, der in einem Prisma 4 gelagert ist und mittels eines Stempels 5 zum Sprengen mit einer äußeren Kraft beaufschlagt werden kann, entlang des beabsichtigten Verlaufs 6 der Sprengfugen und in örtlicher Begrenzung quer zu diesem mit einem Laserstrahl eingewirkt, um bevorzugte Bruchstellen zu schaffen.

Die Einwirkung mit dem Laserstrahl erfolgte auf die Sitzfläche 2 und die äußere Kraft wird mittels des Stempels 5 in die Lauffläche 3 des äußeren Wälzlagerlaufringes 1 als Druckkraft eingeleitet. Dazu ist der äußere Wälzlagerlaufring 1 derart zu dem Stempel 5 ausgerichtet, daß die Druckkraft in demjenigen Bereich der Lauffläche 3 wirkt, der dem einen von der Strahlung beaufschlagten Bereich der Sitzfläche 2 unmittelbar gegenüberliegt, wodurch dieser beim Sprengen auf Zug beansprucht wird.

Anschließend wird der äußere Wälzlagerlaufring 1 in dem Prisma 4 so ausgerichtet, daß der andere, in Figur 1 obere von der Strahlung beaufschlagte Bereich der Sitzfläche 2 in der beschriebenen Weise gesprengt werden kann.

Wenn auf die Sitzfläche 2 des äußeren Wälzlagerlaufringes 1 mit dem Laserstrahl derart eingewirkt wird, daß die Einwirktiefe der Laserstrahlung wenigstens 30 Prozent der Wandstärke des Wälzlagerlaufringes 1 beträgt und dieser in der beschriebenen Weise gesprengt wird, treten im Bereich der Sprengfugen geringe plastische Verformungen auf, die sich dahingehend auswirken, daß der Krümmungsradius der so erhaltenen Halbschalen zu den Sprengfugen hin geringfügig zunimmt, so daß der gesprengte äußere Wälzlagerlaufring 1 die gewünschte Zitronenform aufweist.

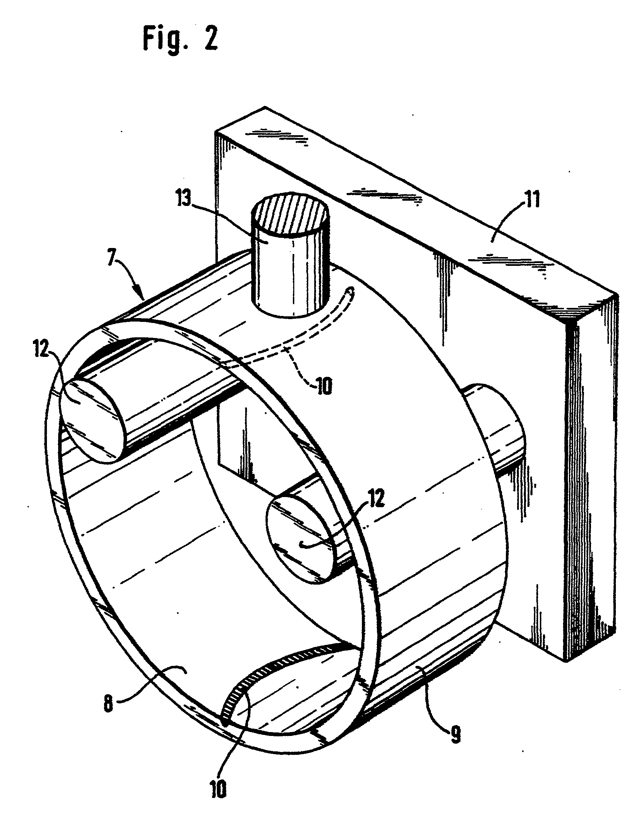

In Fig. 2 ist ein innerer Wälzlagerlaufring 7 mit einer Sitzfläche 8 und einer Lauffläche 9 gezeigt, der an zwei einander diametral gegenüberliegenden Stellen seines Umfangs mit Sprengfugen versehen werden soll. Zu diesem Zweck wurde auf die Sitzfläche 8 entlang des beabsichtigten Verlaufes 10 der Sprengfugen mit einem Laserstrahl eingewirkt. Der innere Wälzlagerlaufring 7 ist mit seiner Sitzfläche 8 auf zwei von einem Gestell 11 ausgehenden Stützen 12 gelagert und kann mittels eines Stempels 13 an seiner Lauffläche 9 mit einer Druckkraft beaufschlagt werden. Dabei ist, wie in Fig. 2 dargestellt, der innere Wälzlagerlaufring 7 zum Stempel 13 derart ausgerichtet, daß die Wirkungslinie der Druckkraft durch den mit dem Laserstrahl beaufschlagten Bereich der Sitzfläche 8 verläuft, so daß dieser beim Sprengen durch die Druckkraft auf Zug beansprucht wird.

Es versteht sich, daß die Sprengfuge jede beliebige Form haben kann. So kann sie beispielsweise in Richtung der Längsachse, oder auch geneigt zu dieser verlaufen. Sie kann auch bogen- oder pfeilförmig ausgeführt sein.

**Patentansprüche**

1. Verfahren zur Herstellung eines an wenigstens einer Stelle seines Umfanges eine durchgehende Sprengfuge aufweisenden Wälzlagerlaufringes, der eine Sitzfläche und eine Lauffläche für Wälzkörper aufweist, wobei dessen Oberfläche vor dem Sprengen entlang wenigstens eines Teils des beabsichtigten Verlaufs der Sprengfuge und in örtlicher Begrenzung quer zu diesem mit einer energiereichen Strahlung beaufschlagt und beim Sprengen der mit der Strahlung beaufschlagte Bereich der Oberfläche durch eine äußere Kraft auf Zug beansprucht wird, **dadurch gekennzeichnet**, daß die Sitzfläche (2, 8) des Laufringes (1, 7) mit der Strahlung beaufschlagt wird und die äußere Kraft als Druckkraft in die Lauffläche (3, 9) in deren dem mit der Strahlung beaufschlagten Bereich (6, 10) der Sitzfläche (2, 8) unmittelbar gegenüberliegenden Bereich eingeleitet wird.

2. Verfahren nach Anspruch 1, **dadurch gekennzeichnet**, daß die energiereiche Strahlung, mit der die Sitzfläche (2, 8) beaufschlagt wird, ein Laser- oder Elektronenstrahl ist.

3. Verfahren nach Anspruch 1 oder Anspruch 2 zur Herstellung eines äußeren Wälzlagerlaufringes mit zwei einander diametral gegenüberliegenden Sprengfugen, **dadurch gekennzeichnet**, daß die Sitzfläche (2, 8) mit der Strahlung jeweils derart beaufschlagt wird, daß die Einwirktiefe der Strahlung wenigstens 30 Prozent der Wandstärke des Laufringes (1, 7) beträgt.

**Claims**

1. Method of manufacturing a rolling bearing ring with a continuous split gap at at least one point of its periphery and comprising a seating face and a running face for rolling elements, its surface being subjected before splitting to high-energy radiation along at least a part of the intended path of the split gap as well as in a locally limited area transverse to this, the irradiated region being subjected to tensile loading by an external force during the splitting operation, characterized in that the seating face (2, 8) of the bearing ring (1, 7) is irradiated and the external force is applied as a compressive force in the region of the running face (3, 9) situated directly opposite the irradiated region (6, 10) of the seating face (2, 8).

2. Method according to Claim, characterized in that the high-energy radiation to which the seating face (2, 8) is subjected is a laser or electron beam.

3. Method according to Claim 1 or 2 of manufacturing an outer rolling bearing ring with two diametrically opposite split gaps, characterized in that the seating face (2, 8) is irradiated in such a way that the depth of action of the radiation is at least 30 percent of the respective wall thickness of the bearing ring (1, 7).

**Revendications**

1. Procédé de fabrication d'une bague de palier à roulement comprenant un joint éclaté continu en au moins un endroit de sa périphérie, laquelle bague présente une face de siège et une face de roulement pour des corps de roulement, sa superficie étant soumise avant l'éclatement à un rayonnement à haute énergie le long d'au moins une partie de l'emplacement souhaité du joint éclaté ainsi que dans une région locale limitée et transverse à celle-ci, la région irradiée de la superficie étant sollicitée en tension lors de l'éclatement, par une force externe, caractérisé en ce que la face de siège (2, 8) de la bague de roulement (1, 7) est irradiée et la force externe est appliquée comme force de compression à la région (6, 10) de la face de roulement (3, 9) située directement en face de la région irradiée de la face de siège (2, 8).

2. Procédé selon la revendication 1, caractérisé en ce que le rayonnement à haute énergie auquel la face de siège (2, 8) est soumise est un rayon laser ou un faisceau d'électrons.

3. Procédé selon la revendication 1 ou 2 pour la fabrication d'une bague extérieure de palier à roulement, éclatée en deux endroits de sa périphérie diamétralement opposés l'un à l'autre, caractérisé en ce que la face de siège (2, 8) est irradiée de telle façon que la profondeur d'action du rayonnement est de l'ordre d'au moins 30 pour cent de l'épaisseur de paroi de la bague de roulement (1, 7).

# Fig. 1

## Fig. 2